# EUROPÄISCHE PATENTSCHRIFT

(11) **EP 0 486 983 B1**
(45) Veröffentlichungstag und Bekanntmachung des Hinweises auf die Patenterteilung: **18.01.1995**
(21) Anmeldenummer: 91119619.4
(22) Anmeldetag: 18.11.1991
(51) Int. Cl.: H02J 13/00

(54) **Verfahren zur Verwendung von Datentelegrammen in Rundsteuersystemen sowie Rundsteueranlage zur Durchführung des Verfahrens**
Method for data preparation in a ripple control system and ripple control installation for performing this method
Méthode de traitement de données dans un système de commande centralisée et installation de commande centralisée pour la réalisation de la méthode

(30) Priorität: 22.11.1990 DE 4037088
(43) Veröffentlichungstag der Anmeldung: 27.05.1992
(73) Patentinhaber: ABB PATENT GmbH, 68309 Mannheim (DE)
(72) Erfinder: Dobberstein, Joachim, W-6805 Heddesheim (DE); Eisenbeiss, Gerhard, Dr., W-6720 Winnweiler (DE)
(74) Vertreter: Rupprecht, Klaus, Dipl.-Ing.

(56) Entgegenhaltungen:
- TECHNISCHE MITTEILUNGEN AEG TELEFUNKEN Bd. 61, Nr. 6, 1971, Berlin DE Seiten 313-320, W. DHEN 'DECABIT, das neue elektroniche AEG-Zellweger-Rundsteuersystem'
- ELEKTROTECHNIK UND MASCHINENBAU Bd. 103, Nr. 7/8, 1988, Wien AT Seiten 347-354, L. KAHL 'Neue Strukturen und Funktionen der Leittechnik in Anlagen der Hochspannungstechnik'
- BBC NACHRICHTEN Bd. 59, Nr. 10, 1977, Mannheim DE Seiten 438-443, W. LANDAU 'Dritte Generation elektronischer Tonfrequenz-Rundsteuerempfänger'

## Beschreibung

Die Erfindung bezieht sich auf ein Verfahren zur Verwendung von Datentelegrammen gemäß dem Übertragungsprotokoll VERSACOM in Rundsteuersystemen, die mit DECABIT-codierten Rundsteuertelegrammen arbeiten, sowie eine Rundsteueranlage zur Durchführung des Verfahrens.

Mit Hilfe von Rundsteuersystemen nehmen Elektrizitätsversorgungsunternehmen Einfluß auf den Lastverlauf in Stromversorgungsnetzen. Rundsteuersysteme bzw. Rundsteueranlagen sind an sich sowohl durch Hardware-Einrichtungen, insbesondere durch die zentralen Sendeanlagen und eine Vielzahl von im Netz installierten Rundsteuerempfängern definiert, als auch durch die Software, die zu deren Betrieb benutzt wird, insbesondere die Art der Codierung der zu übertragenden Rundsteuerbefehle. Hauptsächlich prägt jedoch der Code zur Bildung der Rundsteuertelegramme, mit deren Hilfe Rundsteuerbefehle übertragen werden, ein Rundsteuersystem. Die benutzten Codes, die heute als Synonyme für bestimmte Rundsteuersysteme stehen, sind mit von Firmen gewählten, oft als Warenzeichen eingetragene Namen bezeichnet. Ein solches System ist das DECABIT-System, das im Gegensatz zu den meisten Rundsteuersystemen nicht nach dem Impuls-Intervallverfahren arbeitet, sondern mit einer 5aus10-Codierung, also einer zeitmultiplexen Codierung, bei der auch Impulspausen eine Information beinhalten. Einzelheiten zur Rundsteuertechnik und den üblichen Rundsteuersystemen sind dem Buch "Fernwirktechnik, Überwachen und Steuern von Prozessen", VDI-Verlag 1975, Seite 134 bis 154 zu entnehmen. Das DECABIT-System ist in einem als AEG-Sonderdruck aus "Technische Mitteilungen AEG-Telefunken" 61 (1971) Heft 8 erschienenen Aufsatz "DECABIT, das neue elektronische AEG-Zellweger-Rundsteuersystem" beschrieben.

Neuere Rundsteuersysteme, insbesondere neuere Rundsteuerempfänger arbeiten nicht nur aufgrund von empfangenen und direkt auszuführenden Schaltbefehlen, sondern auch aufgrund von im Empfänger gespeicherten Zeitprogrammen und Fahrplänen. Fahrpläne bestimmen eine Folge von Schaltungen, die ein Empfänger z.B. im Laufe eines Tages oder einer Woche selbsttätig durchführt. Solche Programme oder sonstige Parameter können mit Hilfe von Datentelegrammen von einer Zentrale zu den Empfängern übertragen werden. Mit solchen Datentelegrammen können auch Anweisungen an die Empfänger übertragen werden, z.B. zum Aktivieren bestimmter Programme, zum Stellen einer empfängerinternen Uhr oder zu einer Änderung der Betriebsart.

Für eine solche Fernparametrierung von Rundsteuerempfängern wurde vom Unterkomitee 461.1 "Rundsteuerempfänger" der Deutschen Elektrotechnischen Kommission im DIN und VDE (DKE) ein Übertragungsprotokoll mit der vorläufigen Bezeichnung "VERSACOM" ausgearbeitet und zur Veröffentlichung als Norm-Entwurf (Neues Übertragungsprotokoll mit Datensicherung für vielfältige Übertragungsaufgaben in der Rundsteuertechnik) vorgeschlagen. Das Protokoll gestattet neben der Übertragung von Schaltbefehlen auch die Übertragung von Fernparameterdaten und anderen Anweisungen, z.B. Sperren und Freigeben von Fahrplänen. Darüberhinaus erlaubt es eine Datensicherung und flexible Adressierungen. Im Norm-Entwurf ist im Kapitel 1 und 2 ausgeführt, daß zwar mit dem erarbeiteten Standard eine Kompatibilität verschiedener Empfängerfabrikate angestrebt wurde, aber keine vollständige Anwendbarkeit des Standards in allen existierenden Rundsteuersystemen gewährleistet ist. Zu Prüfen ist jeweils die Zulässigkeit des Parallelbetriebs von VERSACOM-Telegrammen und von Rundsteuertelegrammen des jeweiligen Rundsteuersystems. Wenn keine Verträglichkeit von VERSACOM-Telegrammen mit den Rundsteuertelegrammen gegeben ist, können unerwünschte Schalthandlungen ausgelöst werden.

Um einen störungsfreien Betrieb bei Benutzung der beiden Telegrammarten nebeneinander zu gewährleisten, ist eine Kompatibilitätsprüfung anhand mehrerer im Norm-Entwurf angegebener Kriterien durchzuführen.

Diese Kompatibilitätsprüfung ergibt, daß ein Parallelbetrieb von VERSACOM-Telegrammen und Rundsteuertelegrammen in einer Reihe von Rundsteuersystemen möglich ist, die nach dem Impulsintervallverfahren arbeiten. Dagegen gelten Datentelegramme nach dem VERSACOM-Protokoll als nicht verwendbar in DECABIT-Systemen, da sämtliche Kompatibilitätskriterien nicht erfüllt sind.

Dieser Sachverhalt wird nachstehend näher erläutert, wobei noch berücksichtigt wird, daß in einem Rundsteuersystem sowohl Rundsteuerempfänger alter Bauart vorhanden sein können, die nur für den Empfang von Rundsteuertelegrammen, nicht jedoch für die Verarbeitung von VERSACOM-Telegrammen eingerichtet sind, als auch Rundsteuerempfänger neuer Bauart, die für einen Empfang und die Verarbeitung beider Telegrammarten eingerichtet sind.

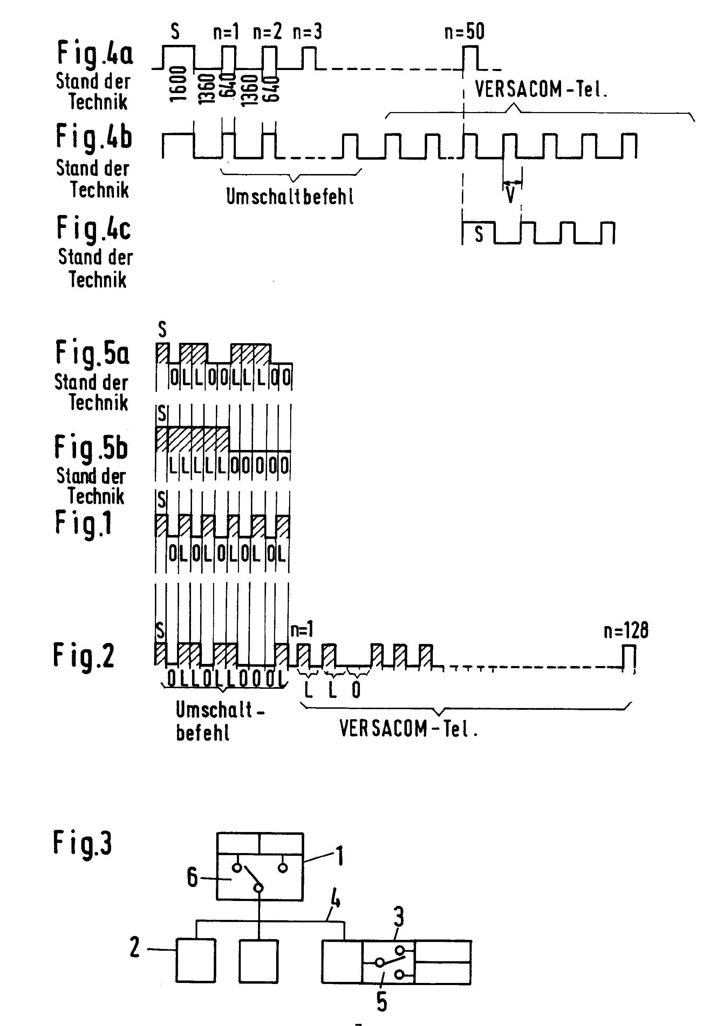

Es werden zunächst Rundsteuersysteme betrachtet, die nach dem Impulsintervallsystem arbeiten und deren Rundsteuertelegramme 50-Bit lang sind, wie z.B. das RICONTIC-System, während VERSACOM-Telegramme 128-Bit lang sein können. Rundsteuertelegramme im Impulsintervallsystem enthalten üblicherweise einen mit Vorwahladressierung bezeichneten Telegrammteil, der zur Erhöhung der Adreßkapazität benutzt wird, - z.B. Anzahl Vorwahlimpulse multipliziert mit Anzahl der Auswahlimpulse ergibt die Gesamtadresskapazität - aber auch zur Auswahl von Verbrauchergruppen vorgesehen ist. Eine solche frei verfügbare Vorwahladresse kann verwendet werden zur Umschaltung der Rundsteuerempfänger neuer Bauart von der üblichen Empfängerfunktion, d.h. Empfangen von Rundsteuerbefehlen, auf Empfang und Auswertung von VERSACOM-Telegrammen. Diese mögliche Betriebsweise wird anhand von Impulsdiagrammen näher erläutert, die in den Figuren 4a bis 4c dargestellt sind.

Figur 4a zeigt das Impulsraster eines Rundsteuertelegramms eines Rundsteuersystems nach dem Impulsintervallverfahren, z.B. des RICONTIC-Systems. Dieses Raster weist einen 1600 ms langen Startimpuls S und 640 ms lange Telegrammimpulse auf. Zwischen den Impulsen liegt jeweils eine 1360 ms lange Pause. Mit n ist die Ordnungszahl 1 bis 50 der möglichen Impulse im Raster bezeichnet. Wenn ein Rundsteuerempfänger den Startimpuls richtig empfangen hat "läuft der Empfänger an", d.h. er generiert das auch vom Sender benutzte Telegrammraster zur Durchführung der Koinzidenzprüfung. Nach Ablauf des eingestellten Zyklus, hier nach Ablauf von 50 Informationsbits kehrt der Empfänger in seine Ruhelage zurück, falls nicht ein Abbruchverfahren einen früheren Rücklauf veranlaßt.

In Figur 4b ist das Impulsraster eines Rundsteuerempfängers neuer Bauart dargestellt. Er generiert, wie alle Rundsteuerempfänger, nach Empfang des Startimpulses S sein Impulsraster zur Prüfung, ob ein Rundsteuerbefehl vorliegt. Wenn im Anfangsteil des Telegramms, nämlich dem für die Vorwahladressierung vorgesehenen Teil, ein Umschaltbefehl enthalten ist, schaltet der Empfänger zur Auswertung der weiteren Impulse auf VERSACOM-Telegramm um. Rundsteuerempfänger alter Bauart erkennen keine gültige Vorwahladressierung und kehren - je nach System - spätestens nach dem 50. Schritt in die Ruhelage zurück. Ein Wiederanlauf solcher Rundsteuerempfänger ist während des weiteren Laufs des VERSACOM-Sendetelegramms dadurch unterbunden, daß keiner der Telegrammimpulse den Startimpuls S nachbildet. Sollte dennoch von Empfängern alter Bauart in fehlerhafter Weise ein VERSACOM-Telegrammimpuls als Startimpuls interpretiert werden, also ein Wiederanlauf stattfinden, so wird bei einer definierten Längendifferenz zwischen Startimpuls inklusive Pause und Telegrammimpuls inklusive Pause ein Telegrammraster im Empfänger generiert, das zeitlich versetzt ist gegenüber dem Raster des noch laufenden VERSACOM-Sendetelegramms, so daß die Koinzidenzprüfung negativ verläuft, also kein Rundsteuerbefehl aus dem VERSACOM-Telegramm abgeleitet werden kann. Diesen Versatz V bei einem Wiederanlauf zeigt Figur 4c in Verbindung mit Figur 4b. Empfänger neuer Bauart interpretieren nach der erfolgten Umschaltung der Empfängerfunktion die empfangenen Impulse nur noch als VERSACOM-Telegrammimpulse.

Es sind somit mehrere Maßnahmen zur Verhinderung von Fehlschaltungen getroffen. Die Forderungen zur Sicherstellung der Kompatibilität, nämlich bei VERSACOM-Telegrammen die Impulse und Impulspausen des jeweiligen Rundsteuersystems zu verwenden und die Bedingung, daß der Startimpuls einschließlich Pause des Rundsteuersystems, d.h. des zugehörigen Rundsteuertelegramms länger sein muß als ein Telegrammimpuls inklusive Pause, sind damit beim Impulsintervallsystem erfüllt.

Ganz andere Verhältnisse bestehen dagegen beim DECABIT-System. Dort gibt es keine Vorwahladressierung und die Länge des Startimpulses stimmt mit derjenigen der Telegrammimpulse überein, ist also nicht länger; die Telegrammimpulse folgen ohne Pause aufeinander. Ein DECABIT-Telegramm umfaßt insgesamt elf Bits, nämlich ein Startbit S und zehn Telegrammbits, die durch fünf Impulse an zehn Plätzen (Telegrammschritte) belegt sind. Die Figuren 5a und 5b zeigen zwei Beispiele für mögliche DECABIT-Telegramme mit einem Startimpuls S und mit L oder 0 bezeichneten Telegrammschritten, wobei aktive Impulse jeweils mit L bezeichnet sind und Impulslücken mit 0.

Davon ausgehend liegt der Erfindung die Aufgabe zugrunde, ein Verfahren und eine Rundsteueranlage zur Durchführung des Verfahrens anzugeben, die es erlauben, VERSACOM-Telegramme und DECABIT-Telegramme nebeneinander in einem Rundsteuersystem zu verwenden, also den sogenannten Parallelbetrieb ermöglichen.

Die Aufgabe wird gelöst durch ein Verfahren zur Verwendung von Datentelegrammen gemäß VERSACOM-Übertragungsprotokoll in Rundsteuersystemen, die mit DECABIT-codierten Rundsteuertelegrammen arbeiten, wobei
a) jedes Bit des VERSACOM-Datentelegramms durch ein Zeichen gebildet wird, das aus einem Impuls und einer Pause mit jeweils der vom DECABIT-Impulsraster vorgegebenen Länge besteht,
b) im Rundsteuersystem zur Übertragung von Rundsteuerbefehlen kein DECABIT-Rundsteuertelegramm mit einer nach einem Startimpuls S sich anschließenden Impulsfolge 0L0L0L0L0L verwendet wird, wobei L für einen aktiven Impuls und 0 für eine Impulslücke steht, und
c) VERSACOM-Datentelegramme durch Sendung eines Umschaltbefehls eingeleitet werden zur Umschaltung der Empfängerfunktion vom Empfang und Auswertung von Rundsteuerbefehlen auf VERSACOM-Datentelegramme, wobei der Umschaltbefehl ein DECABIT-codierter Telegrammteil ist.

Außerdem wird die Aufgabe durch eine Rundsteueranlage gelöst, mit wenigstens einer Sendeeinrichtung und einer Vielzahl von ersten Rundsteuerempfängern zum Empfang und zur Auswertung von DECABIT-codierten Rundsteuertelegrammen, wobei
a) außerdem zweite Rundsteuerempfänger vorhanden sind, die Mittel enthalten, die nach Empfang eines DECABIT-codierten Umschaltbefehls die Empfängerfunktion auf Empfang und Auswertung eines VERSACOM-Datentelegramms umschalten und
b) die Sendeeinrichtung Mittel enthält, die nach Sendung des DECABIT-codierten Umschaltbefehls die Sendeeinrichtung umschaltet auf die Sendung von VERSACOM-Datentelegrammen, deren Zeichen aus einer Impuls-Pausen-Folge im Zeitraster des DECABIT-Systems gebildet sind.

Die erfindungsgemäße Lösung hat den Vorteil, daß mit sehr einfachen Maßnahmen die erforderliche Kompatibilität von DECABIT- und VERSACOM-Telegrammen geschaffen wird und außerdem trotz einer im DECABIT-System fehlenden Vorwahladressierung eine Umschaltung der Empfängerfunktion in Empfängern neuer Bauart ermöglicht wird.

Ein Ausführungsbeispiel der Erfindung wird nachfolgend anhand der Zeichnung näher erläutert. Es zeigen:
- Fig. 1: ein DECABIT-Rundsteuertelegramm, das nicht zur Übertragung von Rundsteuerbefehlen benutzt wird,
- Fig. 2: eine mögliche Impulsfolge,
- Fig. 3: ein Blockschema einer Rundsteueranlage.

Figur 1 zeigt das DECABIT-Rundsteuertelegramm, das nicht zur Übertragung von Rundsteuerbefehlen benutzt wird, weil sonst ein Telegrammteil des VERSACOM-Telegramms ungewollt eine Schalthandlung auslösen könnte.

Figur 2 zeigt eine mögliche Impulsfolge bei Verwendung des Verfahrens. Dabei ist dem VERSACOM-Telegramm ein DECABIT-codierter Umschaltbefehl vorangestellt. Nach Sendung dieses DECABIT-Telegramms schalten sowohl die Sendeeinrichtung als auch alle Rundsteuerempfänger neuer Bauart auf VERSACOM-Protokoll um, wobei sich gleichzeitig die Zeichendarstellung ändert. Im VERSACOM-Telegramm werden zur Darstellung eines Zeichens 0 oder L zwei Rasterplätze benutzt, wobei L durch einen Impuls plus Pause dargestellt ist. Dadurch ist im VERSACOM-Telegramm die Nachbildung eines DECABIT-Rundsteuerbefehls ausgeschlossen, mit Ausnahme des eliminierten Telegramms gemäß Figur 1.

Figur 3 zeigt als Blockschema eine Rundsteueranlage mit einer Sendeeinrichtung 1 und über ein Stromversorgungsnetz 4 angeschlossene erste Rundsteuerempfänger alter Bauart 2 und zweite Rundsteuerempfänger neuer Bauart 3. Sowohl die Sendeeinrichtung 1 als auch die Rundsteuerempfänger neuer Bauart 3 enthalten Einrichtungen 6, 5 zur Umschaltung von der Übertragung und Auswertung von Rundsteuerbefehlen auf die Übertragung und Auswertung von VERSACOM-Telegrammen zur Fernparametrisierung der Rundsteuerempfänger 3. Empfänger alter Bauart 2 reagieren nur auf DECABIT-codierte Rundsteuerbefehle.

## Patentansprüche

1. Verfahren zur Verwendung von Datentelegrammen gemäß VERSACOM-Übertragungsprotokoll in Rundsteuersystemen, die mit DECABIT-codierten Rundsteuertelegrammen arbeiten, dadurch gekennzeichnet, daß
a) jedes Bit des VERSACOM-Datentelegramms durch ein Zeichen gebildet wird, das aus einem Impuls und einer Pause mit jeweils der vom DECABIT-Impulsraster vorgegebenen Länge besteht,
b) im Rundsteuersystem zur Übertragung von Rundsteuerbefehlen kein DECABIT-Rundsteuertelegramm mit einer nach einem Startimpuls S sich anschließenden Impulsfolge 0L0L0L0L0L verwendet wird, wobei L für einen aktiven Impuls und 0 für eine Impulslücke steht, und
c) VERSACOM-Datentelegramme durch Sendung eines Umschaltbefehls eingeleitet werden zur Umschaltung der Empfängerfunktion vom Empfang und Auswertung von Rundsteuerbefehlen auf VERSACOM-Datentelegramme, wobei der Umschaltbefehl ein DECABIT-codierter Telegrammteil ist.

2. Rundsteueranlage zur Durchführung des Verfahrens nach Anspruch 1, mit wenigstens einer Sendeeinrichtung (1) und einer Vielzahl von ersten Rundsteuerempfängern (2) zum Empfang und zur Auswertung von DECABIT-codierten Rundsteuertelegrammen, dadurch gekennzeichnet, daß
a) außerdem zweite Rundsteuerempfänger (3) vorhanden sind, die Mittel (5) enthalten, die nach Empfang eines DECABIT-codierten Umschaltbefehls die Empfängerfunktion auf Empfang und Auswertung eines VERSACOM-Datentelegramms umschalten und
b) die Sendeeinrichtung (1) Mittel (6) enthält, die nach Sendung des DECABIT-codierten Umschaltbefehls die Sendeeinrichtung (1) umschaltet auf die Sendung von VERSACOM-Datentelegrammen, deren Zeichen aus einer Impuls-Pausen-Folge im Zeitraster des DECABIT-Systems gebildet sind.

3. Rundsteueranlage mit wenigstens einem Rundsteuerempfänger (3) nach Anspruch 2, in welcher Rundsteuerbefehle mit Rundsteuertelegrammen des DECABIT-Systems gesendet werden, und außerdem zur Fernparametrierung Datentelegramme gemäß VERSACOM-Übertragungsprotokoll gesendet werden, dadurch gekennzeichnet, daß der Rundsteuerempfänger (3) Mittel (5) enthält, welche nach Empfang eines Umschaltbefehls, der als DECABIT-Telegramm übertragen wird, den Empfänger (3) umschalten auf Empfang und Auswertung von VERSACOM-Telegrammen, in denen ein Zeichen jeweils aus einer Impuls-Pausen-Folge im DECABIT-Zeitraster besteht.

## Claims

1. Method for the use of data telegrams in accordance with the VERSACOM communications protocol in ripple-control systems which work with DECABIT-coded ripple-control telegrams, characterised in that
a) each bit of the VERSACOM data telegram is formed by a character consisting of one pulse and one pause of the length predetermined by the DECABIT pulse code in each case,
b) in the ripple-control system, no DECABIT ripple-control telegram with a pulse sequence of OLOLOLOLOL following a start pulse S is used for transmitting ripple-control commands, L representing an active pulse and 0 representing a pulse gap, and
c) VERSACOM data telegrams are initiated by transmitting a switchover command for switching over the receiver function from reception and evaluation of ripple-control commands to VERSACOM data telegrams, the switchover command being a DECABIT-coded telegram part.

2. Ripple-control system for carrying out the method according to Claim 1, having at least one transmitting device (1) and a multiplicity of first ripple-control receivers (2) for receiving and for evaluating DECABIT-coded ripple-control telegrams, characterised in that
a) in addition second ripple-control receivers (3) are present, which contain means (5) which, after reception of a DECABIT-coded switchover command, switch over the receiver function to reception and evaluation of a VERSACOM data telegram, and
b) the transmitting device (1) contains means (6) which, after transmission of the DECABIT-coded switchover command, switch over the transmitting device (1) to the transmission of VERSACOM data telegrams, the characters of which are formed from a pulse-pause sequence in the timing code of the DECABIT system.

3. Ripple-control system having at least one ripple-control receiver (3) according to Claim 2, in which ripple-control commands are transmitted with ripple-control telegrams of the DECABIT system, and in addition data telegrams in accordance with the VERSACOM communications protocol are transmitted for remote parameterisation, characterised in that the ripple-control receiver (3) contains means (5) which, after reception of a switchover command that is transmitted as a DECABIT telegram, switch over the receiver (3) to reception and evaluation of VERSACOM telegrams, in which a character consists of a pulse-pause sequence in the DECABIT timing code in each case.

## Revendications

1. Procédé pour l'utilisation de télégrammes de données suivant un protocole de transmission Versacom dans des systèmes de télécommande qui fonctionnent avec des télégrammes de télécommande codés en Decabit, caractérisé en ce que :
a) chaque bit du télégramme de données Versacom est formé par un signe qui est constitué d'une impulsion et d'une pause avec chaque fois la longueur prédéterminée par la grille d'impulsion Decabit,
b) dans le système de télécommande pour la transmission d'ordres de télécommande, aucun télégramme de télécommande Decabit avec une suite d'impulsions OLOLOLOLOL qui suit une impulsion de démarrage S n'est utilisé, L étant présent pour une impulsion active et O pour une absence d'impulsion, et
c) des télégrammes de données Versacom sont introduits par envoi d'un ordre de commutation, pour la commutation du fonctionnement du récepteur depuis la réception et l'évaluation d'ordres de télécommande à celles de télégrammes de données Versacom, l'ordre de commutation étant une partie de télégramme codée en Decabit.

2. Installation de télécommande pour la mise en oeuvre du procédé suivant la revendication 1, comportant au moins un dispositif d'émission (1) et une pluralité de premiers récepteurs de télécommande (2) pour la réception et l'évaluation de télégrammes de télécommande codés en Decabit, caractérisé en ce que
a) de plus des deuxièmes récepteurs de télécommande sont présents et comportent des moyens (5) qui, après réception d'un ordre de commutation codé en Decabit, commutent le fonctionnement de récepteurs pour la réception et l'évaluation d'un télégramme de données Versacom et
b) le dispositif d'émission (1) comporte des moyens (6) qui, après émission de l'ordre de commutation codé en Decabit, commutent le dispositif d'émission (1) pour l'émission de télégrammes de données Versacom dont les signes sont formés par une suite d'impulsions et de pauses dans la grille de temps du système Decabit.

3. Installation de télécommande suivant la revendication 2, comportant au moins un récepteur de télécommande (3) dans lequel des ordres de télécommande comportant avec des télégrammes de télécommande du système Decabit sont émis et sont de plus envoyés pour paramétrer à distance des télégrammes de données suivant un protocole de transmission Versacom, caractérisée en ce que le récepteur de télécommande (3) comporte des moyens (5) qui, après réception d'un ordre de commutation transmis sous la forme d'un télégramme Decabit, commutent le récepteur (3) pour la réception et l'évaluation de télégrammes Versacom dans lesquels un signe est chaque fois constitué par une suite d'impulsions et de pauses dans la grille temporelle de Decabit.
